# EUROPEAN PATENT APPLICATION

(11) **EP 1 619 406 A1**
(43) Date of publication of application: **25.01.2006**
(21) Application number: 04425548.7
(22) Date of filing: 21.07.2004
(51) Int. Cl.: F16D 69/02, C08K 3/30

(54) **Additive based on tin sulphides for producing blends for friction linings**

(71) Applicant: Quartz Techno Srl, 20139 Milano (IT)
(72) Inventor: Quartapelle, Alberto, 20144 Milano (IT)
(74) Representative: Petruzziello, Aldo

(57) **Abstract**

An additive based on tin sulphides for preparing blends for the friction linings used in vehicle braking systems, composed of mixtures of Sn₂S₃ and Sn₃S₄.

In relation to currently known forms of production, the additive of the invention offers the advantage of guaranteeing improved stability of the coefficient of friction, especially at high operating temperatures of the friction linings.

## Description

The present invention relates to an additive based on tin sulphides to produce blends for friction linings. The invention also relates to the blends prepared with this additive and to the friction linings produced with said blends.

The function of the friction linings utilized in vehicle braking systems (brake pads, brake shoes, brake and clutch linings) is to produce friction between the lining and the disc.

As these friction linings must have high coefficients of friction which remain stable in a wide range of temperatures and of environmental conditions, additives stabilizing the coefficient of friction are normally added to the formulations of the blends used to prepare them.

In this context the patent US 956 568 explains how the addition to the formulations with which the friction linings are manufactured of sulphides of specific metals has a beneficial effect on the stabilization of the coefficients of friction through the formation of a "Third Body Layer" (T.B.L.) on the surface of the brake discs. In fact, as a consequence of the friction processes, the brake discs tend to deteriorate through time causing phenomena of cracking, surface irregularities and the formation of asperities, which act negatively on the tribological properties of the pads. The addition of additives, especially of some metal sulphides, to the formulations of the blends, allows a thin layer of filling material to be formed on the surface of the disc (T.B.L.), which minimizes these irregularities, allowing the linings to operate in a more regular way, with the consequence of stabilizing the coefficient of friction.

Two friction stabilizers which are already known are the lead sulphide and the antimony sulphide, the use of which has been greatly limited by their negative environmental impact and by their suspected carcinogenicity.

Recently, the tin sulphide has also been successfully proposed as a stabilizer of the coefficient of friction. In particular, the patent EP 0 654 616 relates to the use of SnS and SnS₂, while the patent US 6 303 545 proposes the use of SnS₂ and carbon.

However, currently known products have the drawback of not offering the desired level of stability of the coefficient of friction, especially at high temperatures.

The principal object of the present invention is to provide an additive for blends for friction linings which, with respect to analogous prior art additives, allows a higher stability of the coefficient of friction to be attained, even at high temperatures.

This and other objects are obtained with the additive, the blend and the friction lining of claims 1, 2 and 5 respectively. Preferred embodiments of the invention are claimed in the remaining claims.

In relation to the currently known embodiments, the additive according to the invention offers the advantage of guaranteeing an improved stability of the coefficient of friction, especially at high operating temperatures of the friction linings.

The inventor of the present invention has surprisingly discovered that an additive prevalently composed of mixtures of Sn₂S₃ and Sn₃S₄ has considerably greater stabilization characteristics of the coefficient of friction with respect to those which solely use SnS and SnS₂.

According to a preferred method of implementing the invention, the friction lining is obtained starting from blends containing the additive composed of mixtures of Sn₂S₃ and Sn₃S₄, in the presence of the other components (such as resins, fillers, etc.) normally used for this purpose.

Purely as a non-limiting example, the following formulation provides a blend for friction linings produced according to the teachings of the present invention, the percentages being in weight:
- mixture of Sn₂S₃ + Sn₃S₄: 9% (generally from 0.5 to 10% of the weight of the blend)
- phenolic resin: 10%
- aramid fibre: 1%
- metal fibre: 20%
- fillers: 45%
- graphite: 15%

To evaluate the behaviour of the additive of the invention in terms of stability of the coefficient of friction, two traditional blends Mix+SnS, Mix+Sns₂ (where Mix is the described mixture of phenolic resin + aramid fibre + metal fibre + fillers + graphite) were compared with the blend of the invention (Mix+ Sn₂S₃+Sn₃S₄).

The comparative data are illustrated in the table below, obtained with a KRAUSS machine carrying out six cycles of ten brakings each, with a temperature of the friction lining of 100, 200 and 400°C respectively, at a pressure of 20 bar.

| | **COEFFICIENT OF FRICTION** | | |
|---|---|---|---|
| | 100°C | 200°C | 400°C |
| Mix + SnS | 0,71 | 1,35 | 3,20 |
| Mix + SnS₂ | 0,60 | 1,30 | 2,35 |
| Mix + Sn₂S₃/Sn₃S₄ | 0,56 | 1,18 | 1,88 |

The comparison made shows that the addition of tin sulphide, in the form of the additive (Sn₂S₃+Sn₃S₄) of the invention, has characteristics of coefficients of friction considerably improved with respect to the use of the tin sulphide, both in the SnS form and in the SnS₂ form. In fact, it is observed that with the increase in temperature, the corresponding variations in the coefficient of friction are more limited with the use of the blends of the invention.

Modifications can be made to the invention as described above, to obtain variants which nonetheless come within the scope of the claims hereunder. Therefore, for example, the tin sulphides SnS and SnS2 can also be added to the blend of Mix+ Sn₂S₃+Sn₃S₄.

## Claims

**1.** Additive based on tin sulphides for preparing blends for friction linings, **characterized in that** it contains mixtures of Sn₂S₃ and Sn₃S₄.

**2.** Blend for friction linings, **characterized in that** it contains the additive as claimed in claim 1.

**3.** Blend as claimed in claim 2, **characterized in that** from 0.5% to 10% of the weight of the blend is composed of said additive.

**4.** Blend as claimed in claim 3, **characterized in that** 9% of the weight of the blend is composed of said additive.

**5.** Blend as claimed in one or more of the previous claims, **characterized in that** it also comprises SnS and SnS₂, alone or as a mixture.

**5.** Friction lining, **characterized in that** it comprises a blend according to one or more of the previous claims 2 to 5.

**6.** Friction lining as claimed in claim 6, **characterized in that** it is a brake pad, a brake shoe, a brake and clutch lining for motor vehicles.

**7.** Use of the additive and of the blend as claimed in one or more of the previous claims to produce friction linings for motor vehicle braking systems.
